# EUROPÄISCHE PATENTSCHRIFT

(11) **EP 3 111 101 B1**
(45) Veröffentlichungstag und Bekanntmachung des Hinweises auf die Patenterteilung: **20.02.2019**
(21) Anmeldenummer: 14824354.6
(22) Anmeldetag: 02.12.2014
(51) Int. Cl.: F16C 19/36, F16C 19/38, F16C 35/06, F16D 1/092, F16C 19/54, F16C 35/067, F16C 33/58

(54) **KEGELROLLENLAGERANORDNUNG UND VERFAHREN ZUR VORLASTEINSTELLUNG**
TAPERED ROLLER BEARING ASSEMBLY AND METHOD FOR SETTING PRELOAD
AGENCEMENT DE PALIERS CONIQUES ET PROCÉDÉ DE RÉGLAGE DE PRÉCONTRAINTE

(30) Priorität: 26.02.2014 DE 102014203487
(43) Veröffentlichungstag der Anmeldung: 04.01.2017
(73) Patentinhaber: Schaeffler Technologies AG & Co. KG, 91074 Herzogenaurach (DE)
(72) Erfinder: GIESER, Alexander, 97464 Niederwerrn (DE)
(86) Internationale Anmeldenummer: PCT/DE2014/200673
(87) Internationale Veröffentlichungsnummer: WO 2015/127913

(56) Entgegenhaltungen:
- EP-A1- 2 327 568
- WO-A1-2005/090832
- JP-A- H08 312 760
- US-A- 2 147 787
- US-A- 5 829 891

## Beschreibung

### Technisches Gebiet

Die Erfindung bezieht sich auf Kegelrollenlageranordnungen und auf ein Verfahren zur Einstellung der Vorlast bei Kegelrollenlagern.

Kegelrollenlageranordnung sind im Stand der Technik weit verbreitet und daher dem Fachmann in Funktion und Wirkung bekannt, so dass die Erörterung solcher Lager auf ein Minimum beschränkt werden kann.

Eine gattungsmäßige Kegelrollenlageranordnung ist aus " Die Wälzlagerpraxis" von Eschmann, Hasbargen und Weigand, 1978, Seite 367 entnehmbar.

Die dort gezeigte Kegelrollenlageranordnung umfasst ein erstes Kegelrollenlager, welches einen ersten Innenring, einen ersten Außenring und eine Mehrzahl von Kegelrollen aufweist, die zwischen dem ersten Innenring und dem ersten Außenring abrollen. Ferner umfasst die Kegelrollenlageranordnung noch ein zweites Kegelrollenlager, welches einen zweiten Innenring, einen zweiten Außenring und eine Mehrzahl von Kegelrollen aufweist, die zwischen dem zweiten Innenring und dem zweiten Außenring abrollen. Diese beiden Kegelrollenlager sind in eine zylindrische Bohrung einer Anschlusskonstruktion eingesetzt, wobei die kleineren Durchmesser der einen großen und einen kleineren Durchmesser habenden Kegelrollen von beiden Kegellagern einander zugewandt sind. Dass von den beiden Kegelrollenlagern ein Rad gelagert wird, welches um eine stehende Achse rotiert, ist bedeutungslos, denn dem Fachmann ist bekannt, dass durch bloße Prinzipumkehr genau so gut von den beiden Kegelrollenlagern eine Welle drehbar in einer Anschlusskonstruktion lagerbar ist, wenn diese Welle durch die beiden Innenringe geführt und mit diesen drehfest verbunden ist. Deutlich ist der Darstellung auf Seite 367 entnehmbar, dass im dort gezeigten Lagerungsfall die Außenringe mittels eines Zwischenrings in körperlichem Kontakt stehen. Diesem Zwischenring kommt - wie die nachfolgende Erläuterung noch zeigen wird - eine entscheidende Bedeutung für die Einstellung der Vorlast der beiden Kegelrollenlager zu.

Denn wie leicht einzusehen ist, wird bei denjenigen Lagerringen, die mit dem Zwischenring in körperlichem Kontakt stehen, über die axiale Länge dieses Zwischenrings bezogen auf einen Fixpunkt der radiale Abstand der - bei Kegelrollenlagern- schrägen Laufbahnen dieser Lageringe zur Rotationsachse der Kegelrollenlageranordnung bestimmt. Da alle Teile einer auf Seite 367 gezeigten Kegelrollenlageranordnung toleranzbehaftet sind, kann es dadurch zu unerwünschten Abweichungen der von den Lagerringen auf die Kegelrollen wirkenden Vorlast kommen, selbst wenn alle Teile innerhalb der Toleranzen gefertigt wurden. Daher macht man sich die eben erläuterte Abhängigkeit zu nutze, indem nachdem die Kegellageranordnung vollständig montiert worden ist, die wirkende Vorlast bestimmt wird und bei unzulässigen Werten abstandsverändernde Maßnahmen ergriffen werden. Dazu wird eines der Kegelrollenlager vollständig demontiert und je nach Fall entweder ein in axialer Richtung breiterer oder schmalerer Zwischenring eingesetzt und das demontierte Kegelrollenlager wieder montiert. Anstelle der Verwendung von breiteren Zwischenringen ist es auch üblich, lediglich sogenannte Passscheiben zur axialen Verbreiterung von Zwischenringen zu verwenden.

Wie leicht einzusehen ist, ist die Demontage und anschließende Montage eines der Kegelrollenlager sehr aufwendig. Dies insbesondere auch deshalb, weil die Verbindung von Lagerringen mit den sie lagernden Bauteilen in der Regel als Presssitzverbindung ausgeführt ist.

Aus JP H08 312760 A ist es darüber hinaus bekannt, zumindest einen der beiden Außenringe des Kegelrollenlagers mit einem Umfangsrand auszustatten, der einen Winkel α zur Rotationsachse des Kegelrollenlagers einschließt. Die Anschlusskonstruktion weist eine konische Bohrung auf, wobei der kleinere der beiden Durchmesser dieser konischen Bohrung der Bohrung, welche den anderen Außenring aufnimmt, direkt gegenüber angeordnet ist, und wobei deren Umfangsrand einen Winkel zu der Rotationsachse des Kegelrollenlagers einhält, der dem Winkel α entspricht. Zur Erzeugung einer Vorspannung, mit welcher der Außenring in die konische Bohrung gepresst wird, sind Halter an der Anschlusskonstruktion angeschraubt und an den Stirnseiten der Außenringe anliegen, wobei die Halter im am Außenring anliegenden Zustand elastisch verformt sind und so eine axiale Kraft auf die Außenringe ausüben.

Konstruktiv ist die WO 2005/090832 A1 der JP H08 312760 A ähnlich aufgebaut und weist ebenso wie diese einen Außenring mit einem konischen Teil auf, der mit einem ebenfalls konischen Teil in der den Außenring aufnehmenden Bohrung der Anschlusskonstruktion in Wirkverbindung steht. Die Vorspannung des Lagers wird allerdings durch eine Wellenmutter bewirkt.

Üblich ist es, dass zumindest Wälzlager aus Lagerstahl gefertigt sind. Dies kann für die gelagerte Welle und/oder die Anschlusskonstruktion anders sein. Da Lager während des Betriebs bekanntlich Wärme erzeugen und/oder unterschiedlichen Umgebungstemperaturen ausgesetzt sind, führt die Verwendung von unterschiedlichen Materialien wegen der unterschiedlich großen Wärmeausdrehnungskoeffizienten der verschiedenen Materialien dazu, dass dies beispielsweise zu einer nachteiligen Lockerung des Sitzes bzw. einem Verdrehen der Außenringe in der Anschlusskonstruktion führt.

### Aufgabe der Erfindung

Daher liegt der Erfindung die Aufgabe zugrunde, eine Kegelrollenlageranordnung sowie ein Verfahren zum Einbau eines Kegelrollenlagers anzugeben, welches eine verdrehsichere Montage von Kegelrollenlagern in einer Anschlusskonstruktion erlaubt

Eine Kegelrollenlageranordnung ist in Anspruch 1 angegeben. Vorteilhafte Aus- und Weiterbildungen dieser Kegelrollenlageranordnung sind in den Ansprüchen 2 bis 6 zu finden.

Ein Verfahren zur Vorlasteinstellung bei einem Kegelrollenlager findet sich in Anspruch 7.

Ein Mitdrehen des Außenrings, dessen äußerer Umfangsrand mit der Rotationsachse der Kegellageranordnung einen Winkel α einschließt, in der Anschlusskonstruktion ist dann ausgeschlossen, wenn der Umfangsrand mit einem ersten Führungsmittel versehen ist, das mit einem zweiten, zu dem ersten Führungsmittel komplementären und am konischen Teil der Bohrung der Anschlusskonstruktion vorgesehenen Führungsmittel zusammenwirkt und das erste Führungsmittel eine vom Umfangsrand radial abstehende Rippe und wenn das zweite Führungsmittel eine Nut ist.

Eine axiale Verschiebung des Außenrings, dessen Umfangsrand mit der Rotationsachse der Kegellageranordnung einen Winkel α einschließt, ist dann besonders einfach, wenn am größeren Durchmesser des konischen Teils der Bohrung ein zylindrischer Fortsatz anschließt, in welchen ein Innengewinde eingeschnitten ist, und wenn eine, zwei Stirnflächen aufweisende Ringmutter in das Innengewinde eingeschraubt ist, wobei in eingeschraubtem Zustand eine der beiden Stirnflächen an dem Außenring anliegt, der mit der Rotationsachse der Kegellageranordnung einen Winkel *α* einschließt. Insbesondere lassen sich durch eine Wahl einer entsprechenden Gewindesteigung auch eine sehr feine Einstellung der Vorlast bewirken. Da i.Ü. die Ringmutter den Verstellweg blockiert, bleibt eine einmal gefundene Einstellung dauerhaft erhalten.

Vorteilhaft ist es, wenn beiden Innenringe zwischen einer Wellenschulter und einer auf die Welle aufschraubbare Zentralmutter auf der Welle axial festgelegt sind, da damit ein axiales "Wandern" der Innenringe und eine damit einhergehende Veränderung der Vorlast unterbunden wird.

Weist die Ringmutter an ihrer dem Außenring abgewandten Stirnfläche Ansätze und Einschnitte auf, können diese Ansätze und Einschnitte zum Ansetzen entsprechender Werkzeuge verwendet werden, um die Ringmutter innerhalb des Fortsatzes zu verdrehen.

Eine Verstellung der Ringmutter innerhalb des Fortsatzes bzw. eine Veränderung der Vorspannung muss nicht befürchtet werden, wenn ein Sicherungsmittel vorgesehen ist, welches den Fortsatz mit der Ringmutter lösbar verbindet. Besonders vorteilhaft ist es, wenn zum lösbaren Verbinden des Fortsatzes mit der Ringmutter deren Ansätze oder Einschnitte genutzt werden.

Vorteilhaft ist es, wenn die Kegellageranordnung die Welle eines Getriebes lagert. Dies insbesondere auch deshalb, weil oftmals im Zusammenhang mit Getriebeanwendungen nicht der Bauraum zur Verfügung steht, um eine Kegelrollenreihe zur Einstellung der Vorlast zu demontieren.

Von eigenständiger Bedeutung im Zusammenhang mit der Erfindung ist auch noch zu erwähnen, dass die nach der Erfindung gegebene sehr einfache und durch eine bloße axiale Verschiebung des Außenrings bewirkte Einstellmöglichkeit der Vorlast nicht nur auf die Erstinstallation der Kegellageranordnung beschränkt ist, sondern auch zum Nachstellen der Vorlast während des laufenden Betriebs genutzt werden kann.

### Kurze Beschreibung der Figuren

Es zeigen:
- Fig. 1: eine Kegellageranordnung entsprechend der Erfindung;
- Fig. 2: eine Detailansicht eines Außenrings innerhalb der Anschlusskonstruktion; und
- Fig. 3: eine Detailansicht zwischen Fortsatz und Ringmutter.

### Wege zum Ausführen der Erfindung

Die Erfindung soll nun anhand der Figuren näher erläutert werden.

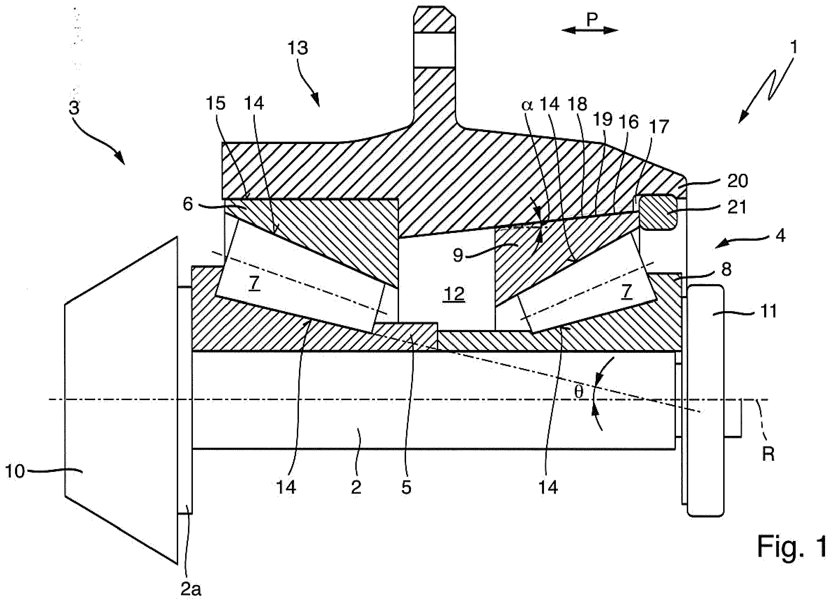

Die in Fig. 1 dargestellte Kegellageranordnung 1 dient zur Lagerung einer Ritzelwelle 2, welche Bestandteil einer nicht weiter dargestellten Getriebeanordnung ist. Diese Kegellageranordnung 1 umfasst im Wesentlichen ein erstes Kegelrollenlager 3 und ein zweites Kegelrollenlager 4.

Das erste Kegelrollenlager 3 wird dabei von einem ersten Innenring 5, einem ersten Außenring 6 und einer Mehrzahl von Kegelrollen 7 gebildet, die zwischen dem ersten Innenring 5 und dem ersten Außenring 6 abrollen. Das zweite Kegelrollenlager 4 ist ähnlich aufgebaut und umfasst ebenfalls einen zweiten Innenring 8, einen zweiten Außenring 9 und ebenfalls eine Mehrzahl, zwischen dem zweiten Innenring 8 und dem zweiten Außenring 9 abrollenden Kegelrollen 6. Die Innenringe 5, 8 beider Kegelrollenlager 3, 4 werden von der Ritzelwelle 2 durchdrungen und sind mit dieser drehfest verbunden. Die axiale Festlegung der beiden Innenringe 5, 8 auf der Ritzelwelle 2 erfolgt zwischen der einen Seite einer Wellenschulter 2a, an deren anderer Seite das Ritzel 10 anliegt, und einer Wellenmutter 11, welche zu diesem Zweck auf die Ritzelwelle 2 aufgeschraubt ist.

Die beiden Kegelrollenlager 3, 4 sind in eine, mit einer Bohrung 12 versehenen Anschlusskonstruktion 13 eingesetzt, wobei die jeweils kleineren Durchmesser der einen größeren und einen kleineren Durchmesser habenden Kegelrollen 6 von beiden Kegelrollenlagern 3, 4 einander zugewandt sind.

Wie bei Kegelrollenlagern üblich, haben auch die beiden Kegelrollenlager 3, 4 die jeweiligen Innenringe 5, 8 und Außenringe 6, 9 Laufbahnen 14, die einen Winkel θ mit der Rotationsachse R der Kegellageranordnung 1 einschließen. Aus Gründen der Übersichtlichkeit ist diese Winkelbeziehung zwischen Laufbahn und Rotationsachse R nur für die Laufbahn 14 des ersten Innenrings 5 des ersten Kegelrollenlagers 3 gezeigt.

Wie der Fig. 1 entnehmbar ist, ist der Teil 15 der Bohrung 12, in welchen der erste Außenring 6 presssitzverbunden gesetzt ist, zylindrisch ausgebildet. Der in axialer Richtung an den zylindrischen Teil 15 anschließende Teil 16 der Bohrung 12 ist konisch ausgebildet, wobei der kleinere Durchmesser des konischen Teils 16 unmittelbar an den zylindrischen Teil 15 anschließt und sich dann hin zum Rand 17 der Anschlusskonstruktion 13 zum großen Durchmesser erweitert. Durch die Konizität des Teils 16 der Bohrung schließen die Mantelfläche 18 der konischen Teils 16 und die Rotationsachse R einen Winkel *α* ein.

Wie in Fig. 1 veranschaulicht, nimmt der konische Teil 16 der Bohrung 12 den zweiten Außenring 9 des zweiten Kegelrollenlagers 4 auf. Um eine gute Anlage des Umfangsrandes 19 des zweiten Außenrings 9 im konischen Teil 16 der Bohrung 12 sicherzustellen, schließt auch der Umfangsrand 19 des zweiten Außenrings 9 mit der Rotationsachse R der Kegellageranordnung 1 ebenfalls eine dem Winkel *α* entsprechende Winkelbeziehung ein.

An den größeren Durchmesser des konischen Teils 16 der Bohrung 12 schließt ein zylindrischer Fortsatz 20 an, in welchen ein Innengewinde 21a eingeschnitten ist. In das Innengewinde 21a ist eine Ringmutter 21 eingedreht, deren eine Stirnseite 22 am zweiten Außenring 9 anliegt.

Sind - wie in Fig. 1 gezeigt - beide Kegelrollenlager 3, 4 in der Anschlusskonstruktion 13 verbaut, wird durch Verdrehen der Ringmutter 21 der zweite Außenring 9 gegenüber dem zweiten Innenring 8 axial verschoben. Bedingt durch dieses axiale Verschieben des zweiten Außenrings 9 -angedeutet durch den Doppelpfeil P- gegenüber dem zweiten Innenring 8 verändert sich wegen den die Winkelbeziehung *α* einhaltenden Kontaktflächen 16 und 19 gleichzeitig auch der radiale Abstand zwischen der Rotationsachse R der Kegellageranordnung 1 und der Laufbahn 14 des zweiten Außenrings 9. Eine solche radiale Abstandsänderung führt dann je nach Drehrichtung der Ringmutter 21 zu einer gewünschten Erhöhung oder Erniedrigung der Vorlast beim zweiten Kegelrollenlager 4.

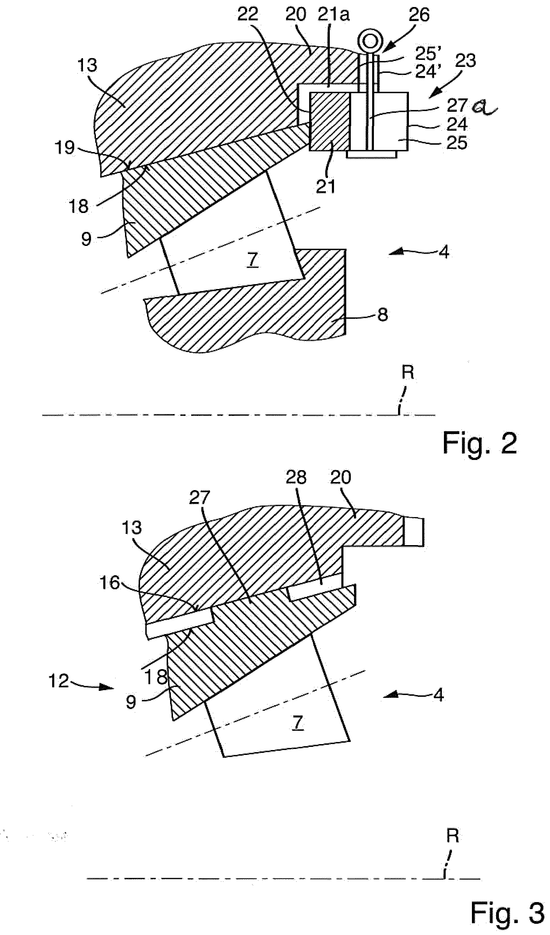

Wie der Fig. 2, welche lediglich eine Ringmutter 21, den Fortsatz 20 der Anschlusskonstruktion 13 und einen Teil des zweiten Außenrings 9 zeigt, entnehmbar ist, ist die Ringmutter 21 gegen Verdrehung gesichert. Dazu ist die andere Stirnseite 23 der Ringmutter 21 kronenmutterförmig ausgebildet und weist folglich in Umfangsrichtung eine Mehrzahl von sich in axialer Richtung erstreckenden Ansätzen 24 und Einschnitten 25 auf, wovon jeweils nur ein Ansatz 24 und ein Einschnitt 25 in Fig. 2 sichtbar ist. Auch das Ende 26 des Fortsatzes 20 weist eine, durch eine Abfolge von in Umfangsrichtung angeordneten Ansätzen 24' und Einschnitten 25' gebildete kronenmutterförmige Struktur auf, wovon auch hier nur ein Ansatz 24' und ein Einschnitt 25' in Fig. 2 sichtbar ist. Hat die Ringmutter 21 nach dem Verdrehen zur Einstellung der Vorlast ihre Endlage im Fortsatz 20 eingenommen, ist in Fig. 2 als Sicherungsmittel 27a ein Splint durch die Einschnitte 25, 25' gesetzt.

Auch der Fig. 2 entnehmbar. dass die Ansätze 24 und Einsätze 25 der Ringmutter 21 nicht bündig mit dem Ende 26 des Fortsatzes 20 abschließen, sondern aus diesem herausragen. Dieses Herausragen erlaubt es, ein entsprechendes Hebelwerkzeuge (nicht gezeigt) in die zwischen den Ansätzen 24 belassenen Einschnitten 25 einzufügen, um dann die Ringmutter 21 im Fortsatz 20 zu verdrehen.

Fig. 3 zeigt ein Kegelrollenlager 4 gemäß der Erfindung, bei welcher der zweite Außenring 9 gegenüber dem konischen Teil 16 der Bohrung 12 der Anschlusskonstruktion 13 verdrehsicher angeordnet ist. Zu diesem Zweck ist der Umfangsrand 19 des zweiten Außenrings 9 mit einer radial abstehenden Rippe 27 versehen, die in eine der Rippe 27 komplementäre und in den konischen Teil 16 der Bohrung 12 eingebrachte Nut 28 eingreift.

### Bezugszeichenliste

- 1: Kegellageranordnung
- 2: Ritzelwelle
- 2a: Wellenschulter
- 3: erstes Kegelrollenlager
- 4: zweites Kegelrollenlager
- 5: erster Innenring
- 6: erster Außenring
- 7: Kegelrollen
- 8: zweiter Innenring
- 9: zweiter Außenring
- 10: Ritzel
- 11: Wellenmutter
- 12: Bohrung
- 13: Anschlusskonstruktion
- 14: Laufbahn
- 15: zyl. Teil
- 16: kon. Teil
- 17: Rand
- 18: Mantelfläche
- 19: Umfangsrand
- 20: Fortsatz
- 21: Ringmutter
- 21a: Innengewinde
- 22: eine Stirnseite
- 23: andere Stirnseite
- 24: Ansatz
- 25: Einschnitt
- 26: Ende
- 27: Rippe

- 27a: Sicherungsmittel

- 28: Nut

## Patentansprüche

1. Kegellageranordnung mit einem ersten Kegelrollenlager (3), umfassend einen ersten Innenring (5), einen ersten Außenring (6) und eine Mehrzahl von Kegelrollen (7), die zwischen dem ersten Innenring (5) und dem ersten Außenring (6) abrollen, mit einem zweiten Kegelrollenlager (4), umfassend einen zweiten Innenring (8) einen zweiten Außenring (9) und eine Mehrzahl von Kegelrollen (6), die zwischen dem zweiten Innenring (8) und dem zweiten Außenring (9) abrollen, mit einer Anschlusskonstruktion (13), die mit einer Bohrung (12) versehen ist, in welche die beiden Außenringe (5,9) der beiden Kegelrollenlager (3,4) eingesetzt sind, und mit einer Welle (2), welche durch die Innenringe (5,8) der beiden Kegelrollenlager (3,4) geführt und mit diesen drehfest verbunden ist, wobei ein äußerer, sich in axialer Richtung ausdehnender Umfangsrand (18) eines zweiten Außenrings (9) mit der Rotationsachse (R) der Kegellageranordnung (1) einen Winkel *α* einschließt, und wobei die Bohrung (12) in der Anschlusskonstruktion (13) neben einem zylindrischen Teil (15) auch einen konischen Teil (16) aufweist, wobei der kleinere Durchmesser des konischen Teils (16) an den zylindrischen Teil (15) angrenzt und die Mantelfläche (19) des konischen Teils (16) mit der Rotationsachse (R) der Kegelrollenanordnung (1) einen Winkel einschließt, der dem Winkel *α* entspricht, **dadurch gekennzeichnet, dass** zumindest der zweite Außenring (9), dessen Umfangsrand (18) mit der Rotationsachse (R) der Kegellageranordnung (1) den Winkel *α* einschließt, am Umfangsrand (18) mit einem ersten Führungsmittel (27) versehen ist, das mit einem zweiten, zu dem ersten Führungsmittel (27) komplementären und am konischen Teil (16) der Bohrung (12) der Anschlusskonstruktion (13) vorgesehenen Führungsmittel (28) zusammenwirkt, wobei das erste Führungsmittel eine vom Umfangsrand (18) radial abstehende Rippe (27) und das zweite Führungsmittel eine Nut (28) ist.

2. Kegellageranordnung nach Anspruch 1 **dadurch gekennzeichnet, dass** am größeren Durchmesser des konischen Teils (16) der Bohrung (12) ein zylindrischer Fortsatz (20) anschließt, in welchen ein Innengewinde (21a) eingeschnitten ist, und dass eine, zwei Stirnflächen (22,23) aufweisende Ringmutter (21) in das Innengewinde (21a) eingeschraubt ist, wobei in eingeschraubtem Zustand eine der beiden Stirnflächen (22) an dem zweiten Außenring (9) anliegt, der mit der Rotationsachse (R) der Kegellageranordnung (1) einen Winkel *α* einschließt.

3. Kegellageranordnung nach Anspruch 1 oder 2 **dadurch gekennzeichnet, dass** die beiden Innenringe (5,8) zwischen einer Wellenschulter (2a) und einer auf die Welle (2) aufschraubbare Wellenmutter (11) auf der Welle (2) axial festgelegt sind.

4. Kegellageranordnung nach Anspruch 2 oder 3 **dadurch gekennzeichnet, dass** die Ringmutter (21) an ihrer dem zweiten Außenring (9) abgewandten Stirnfläche (23) in axialer Richtung verlaufende Ansätze (24) und Einschnitte (25) aufweist.

5. Kegellageranordnung nach Anspruch 4 **dadurch gekennzeichnet, dass** die Ringmutter (21) drehfest festgelegt ist, indem mindestens ein Sicherungsmittel (27a) vorgesehen ist, welches den Fortsatz (20) und die Ringmutter (21) lösbar verbindet.

6. Kegellageranordnung nach einem der Ansprüche 1 bis 5 **dadurch gekennzeichnet, dass** die Kegellageranordnung (1) die Welle (2) eines Getriebes lagert.

7. Verfahren zur Vorlasteinstellung bei einem Kegelrollenlager mit einem Innenring (8) und einem Außenring (9) und einer Mehrzahl von Kegelrollen (7), die zwischen Innenring (8) und Außenring (9) abrollen, wobei der Außenring (9) mit seinem äußeren Umfangsrand (18) in eine Bohrung (12) einer Anschlusskonstruktion (13) eingesetzt ist, **dadurch gekennzeichnet dass** der äußere Umfangsrand (18) und die Bohrung (12) einen Winkel (α) zur Rotationsachse (R) des Kegelrollenlagers (4) einschließen und dass erste Führungsmittel (27) am Außenring (9) gegenüber zweiten, zu den ersten Führungsmitteln (27) komplementären Führungsmitteln (28) der Bohrung (12) in axialer Richtung verschoben werden, wobei das erste Führungsmittel eine vom Umfangsrand (18) radial abstehende Rippe (27) und das zweite Führungsmittel eine Nut (28) ist.

## Claims

1. Cone bearing arrangement having a first tapered roller bearing (3), comprising a first inner ring (5), a first outer ring (6) and a plurality of tapered rollers (7) which roll between the first inner ring (5) and the first outer ring (6), having a second tapered roller bearing (4), comprising a second inner ring (8), a second outer ring (9) and a plurality of tapered rollers (6) which roll between the second inner ring (8) and the second outer ring (9), having a connector construction (13) which is provided with a bore (12), into which the two outer rings (5, 9) of the two tapered roller bearings (3, 4) are inserted, and having a shaft (2) which is guided through the inner rings (5, 8) of the two tapered roller bearings (3, 4) and is connected fixedly to them so as to rotate with them, an outer circumferential edge (18) of a second outer ring (9), which outer circumferential edge (18) extends in the axial direction, encloses an angle α with the rotational axis (R) of the cone bearing arrangement (1), and the bore (12) in the connector construction (13) also having a conical part (16) in addition to a cylindrical part (15), the smaller diameter of the conical part (16) adjoining the cylindrical part (15), and the circumferential face (19) of the conical part (16) enclosing an angle with the rotational axis (R) of the cone bearing arrangement (1), which angle corresponds to the angle α, **characterized in that** at least the second outer ring (9), the circumferential edge (18) of which encloses the angle α with the rotational axis (R) of the cone bearing arrangement (1), is provided on the circumferential edge (18) with a first guide means (27) which interacts with a second guide means (28) which is complementary with respect to the first guide means (27) and is provided on the conical part (16) of the bore (12) of the connector construction (13), the first guide means being a rib (27) which projects radially from the circumferential edge (18), and the second guide means being a groove (28).

2. Cone bearing arrangement according to Claim 1, **characterized in that** the larger diameter of the conical part (16) of the bore (12) adjoins a cylindrical projection (20), into which an internal thread (21a) is cut, and **in that** a ring nut (21) which has two end faces (22, 23) is screwed into the internal thread (21a), one of the two end faces (22) bearing, in the screwed-in state, against the second outer ring (9) which encloses an angle α with the rotational axis (R) of the cone bearing arrangement (1).

3. Cone bearing arrangement according to Claim 1 or 2, **characterized in that** the two inner rings (5, 8) are fixed axially on the shaft (2) between a shaft shoulder (2a) and a shaft nut (11) which can be screwed onto the shaft (2).

4. Cone bearing arrangement according to Claim 2 or 3, **characterized in that**, on its end face (23) which faces away from the second outer ring (9), the ring nut (21) has notches (25) and lugs (24) which run in the axial direction.

5. Cone bearing arrangement according to Claim 4, **characterized in that** the ring nut (21) is fixed in a torque-proof manner, by at least one securing means (27a) being provided which connects the projection (20) and the ring nut (21) releasably.

6. Cone bearing arrangement according to one of Claims 1 to 5, **characterized in that** the cone bearing arrangement (1) mounts the shaft (2) of a transmission.

7. Method for setting the preload in a tapered roller bearing having an inner ring (8), an outer ring (9) and a plurality of tapered rollers (7) which roll between the inner ring (8) and the outer ring (9), the outer ring (9) being inserted with its outer circumferential edge (18) into a bore (12) of a connector construction (13), **characterized in that** the outer circumferential edge (18) and the bore (12) enclose an angle (α) with respect to the rotational axis (R) of the tapered roller bearing (4), and **in that** first guide means (27) on the outer ring (9) are displaced in the axial direction with respect to second guide means (28) of the bore (12) which are complementary with respect to the first guide means (27), the first guide means being a rib (27) which projects radially from the circumferential edge (18), and the second guide means being a groove (28).

## Revendications

1. Agencement de paliers coniques
comprenant un premier palier à rouleaux coniques (3), comportant une première bague intérieure (5), une première bague extérieure (6) et une pluralité de rouleaux coniques (7) qui roulent entre la première bague intérieure (5) et la première bague extérieure (6),
un deuxième palier à rouleaux coniques (4), comportant une deuxième bague intérieure (8), une deuxième bague extérieure (9) et une pluralité de rouleaux coniques (6) qui roulent entre la deuxième bague intérieure (8) et la deuxième bague extérieure (9),
une structure de raccordement (13) qui est dotée d'un alésage (12) dans lequel les deux bagues extérieures (5, 9) des deux paliers à rouleaux coniques (3, 4) sont insérées, et
un arbre (2), lequel est guidé à travers les bagues intérieures (5, 8) des deux paliers à rouleaux coniques (3, 4) et est relié à celles-ci de manière solidaire en rotation,
un bord périphérique extérieur (18), s'étendant dans la direction axiale, d'une deuxième bague extérieure (9) formant avec l'axe de rotation (R) de l'agencement de paliers coniques (1) un angle a, et l'alésage (12) dans la structure de raccordement (13) comprenant, en plus d'une partie cylindrique (15), également une partie conique (16), le plus petit diamètre de la partie conique (16) étant adjacent à la partie cylindrique (15) et la surface d'enveloppe (19) de la partie conique (16) formant avec l'axe de rotation (R) de l'agencement de paliers coniques (1) un angle qui correspond à l'angle a,
**caractérisé en ce**
**qu'**au moins la deuxième bague extérieure (9), dont le bord périphérique (18) forme avec l'axe de rotation (R) de l'agencement de paliers coniques (1) l'angle α, est dotée d'un premier moyen de guidage (27), au niveau du bord périphérique (18), lequel premier moyen de guidage coopère avec un deuxième moyen de guidage (28) complémentaire au premier moyen de guidage (27) et prévu sur la partie conique (16) de l'alésage (12) de la structure de raccordement (13), le premier moyen de guidage étant une nervure (27) faisant saillie radialement à partir du bord périphérique (18) et le deuxième moyen de guidage étant une rainure (28).

2. Agencement de paliers coniques selon la revendication 1,
**caractérisé en ce**
**qu'**un prolongement cylindrique (20) se raccorde au plus grand diamètre de la partie conique (16) de l'alésage (12), prolongement dans lequel est entaillé un filetage intérieur (21a), et
**en ce qu'**un écrou annulaire (21) comprenant deux faces latérales (22, 23) est vissé dans le filetage intérieur (21a), l'une des deux faces latérales (22) s'appuyant, à l'état vissé, contre la deuxième bague extérieure (9) qui forme un angle α avec l'axe de rotation (R) de l'agencement de paliers coniques (1) .

3. Agencement de paliers coniques selon la revendication 1 ou 2,
**caractérisé en ce que**
les deux bagues intérieures (5, 8) sont fixées axialement sur l'arbre (2) entre un épaulement d'arbre (2a) et un écrou d'arbre (11) pouvant être vissé sur l'arbre (2).

4. Agencement de paliers coniques selon la revendication 2 ou 3,
**caractérisé en ce que**
l'écrou annulaire (21) comprend, sur sa face frontale (23) opposée à la deuxième bague extérieure (9), des saillies (24) et des entailles (25) s'étendant dans la direction axiale.

5. Agencement de paliers coniques selon la revendication 4,
**caractérisé en ce que**
l'écrou annulaire (21) est fixé de manière bloquée en rotation du fait qu'au moins un moyen de fixation (27a) est prévu, lequel relie de manière amovible le prolongement (20) et l'écrou annulaire (21).

6. Agencement de paliers coniques selon l'une quelconque des revendications 1 à 5,
**caractérisé en ce que**
l'agencement de paliers coniques (1) supporte l'arbre (2) d'une transmission.

7. Procédé de réglage de précontrainte d'un palier à rouleaux coniques comprenant une bague intérieure (8) et une bague extérieure (9) et une pluralité de rouleaux coniques (7) qui roulent entre la bague intérieure (8) et la bague extérieure (9), la bague extérieure (9) étant insérée par son bord périphérique extérieur (18) dans un alésage (12) d'une structure de raccordement (13),
**caractérisé en ce que**
le bord périphérique extérieur (18) et l'alésage (12) forment un angle (α) par rapport à l'axe de rotation (R) du palier à rouleaux coniques (4) et **en ce que** des premiers moyens de guidage (27) sur la bague extérieure (9) sont déplacés dans la direction axiale par rapport à des deuxièmes moyens de guidage (28), complémentaires aux premier moyens de guidage (27), de l'alésage (12), le premier moyen de guidage étant une nervure (27) faisant saillie radialement à partir du bord périphérique (18) et le deuxième moyen de guidage étant une rainure (28).
